# EUROPEAN PATENT APPLICATION

(11) **EP 4 318 158 A1**
(43) Date of publication of application: **07.02.2024**
(21) Application number: 23188832.2
(22) Date of filing: 01.08.2023
(51) Int. Cl.: G05D 1/00

(54) **ADVANCED PILOT ASSISTANCE SYSTEM (APAS) FOR ESTIMATING COVERAGE AREA AND VIEWING AREA AND METHOD THEREOF**

(30) Priority: 01.08.2022 IN 202221044026
(71) Applicant: Ideaforge Technology Pvt. Ltd., Navi Mumbai, Maharashtra 400710 (IN)
(72) Inventor: BHAT, Ashish, 400710 Navi Mumbai, Maharashtra (IN); SARUP, Dhirendra Vipan, 400710 Navi Mumbai, Maharashtra (IN)
(74) Representative: Isern Patentes y Marcas S.L.

(57) **Abstract**

A system and a method for estimating coverage area and viewing area for an Unmanned Aerial Vehicle 104 (UAV 104) is disclosed. It involves creating an operational map of a home location's area coverage 302 pertaining to a complex terrain based on no fly zone polygon data and elevation data, based on the information of the area coverage provided by a navigation unit. The map is created using multiple sample points and validating said sample points by checking whether or not they are at no fly zone or exceeding maximum AGL. Moreover, the operational map is drawn by using home location as a center point. Further, it involves determining and generating coverage area and viewing area of the UAV based on the operational map. It also discloses a feature of checking take-off suitability.

## Description

### TECHNICAL FIELD

The present disclosure relates to the field of Unmanned Aerial Vehicles (UAVs). In particular, the present disclosure relates to navigation of UAVs. More particularly, it pertains to an advanced pilot assistance systems (APAS) for estimating coverage area and viewing area during flight of the UAV and a method thereof.

### BACKGROUND

Background description includes information that may be useful in understanding the present invention. It is not an admission that any of the information provided herein is prior art or relevant to the presently claimed invention, or that any publication specifically or implicitly referenced is prior art.

The term 'unmanned aerial vehicle' (UAV) refers to an aircraft that may operate and fly without any human pilot, crew, or passengers therein. Basically, UAVs constitute a type of unmanned aircraft systems (UASs), which can be controlled and remotely operated through ground-based remote controllers and communication devices. The UAVs are also known as drones and are an essential asset for military personnel. Also, the UAVs can play a crucial role in non-military areas such as forest fire monitoring, aerial photography, product deliveries, agriculture, policing and surveillance, infrastructure inspections, science, smuggling, and drone racing. Generally, conventional UAVs are operated through remote drone operators.

However, maneuvering the UAV in an unknown terrain is one of the difficult tasks as the unknown terrain may possess land surface with varying altitudes. Therefore, knowing characteristics of the terrain before maneuvering the UAV over it is very important. However, only navigation map and altitude data of any terrain are not enough to achieve uninterrupted UAV maneuvering as it is very challenging to find from the preloaded map certain characteristics of the terrain, such as no-fly zones, variation in altitudes, as well as estimate of coverage area, i.e., suitability of flying over the area coverage based on the home location/take-off location and UAV characteristics, and viewing area, i.e., suitability of flying over the area coverage based on the target location and UAV characteristics.

There is, therefore, a need in the art to provide a smart, effective, and user-friendly solution for obviating the above-mentioned problems and facilitating uninterrupted maneuvering of the UAV.

### OBJECTS OF THE PRESENT DISCLOSURE

A general object of the present disclosure is to provide an effective assistance to an Unmanned Aerial Vehicle (UAV) facilitating it to maneuver over an unknown and/ or complex terrain.

An object of the present disclosure is to generate an operational map of the terrain.

Another object of the present disclosure is to estimate coverage area of the UAV and viewing area associated with a specific target, with the help of the operational map.

Another object of the present disclosure is to allow a user to select a home position, and correspondingly generate the operational map by considering the selected home position as a centre.

Another object of the present disclosure is to represent distinct flying altitudes for the UAV with different colors, hence providing better experience to the user.

Another object of the present disclosure is to denote a no fly zone in the generated operational map, which helps in avoiding unwanted flight interruptions.

Another object of the present disclosure is to provide a smart, efficient, and user-friendly system and method for assisting the UAV by estimating the coverage area and the viewing area.

### SUMMARY

An aspect of the present disclosure pertains to a system for assisting an Unmanned Aerial Vehicle (UAV) in generating an operational map of a Region of Interest (RoI). The system comprises a controller, which further comprises a processor coupled with a memory, wherein the memory stores one or more instructions executable by the processor to: (a) obtain, through a navigation unit, a geographical map of the RoI; (b) extract, from the obtained geographical map, data associated with the RoI, wherein the data includes no fly zone polygon data, elevation data, latitude and longitude of the RoI; (c) derive one or more metrics by merging the extracted data with a plurality of acquired image frames of the RoI; (d) allow a user to select, through a human-machine interface (HMI), a home position of the UAV within the RoI; and (e) generate, by taking into consideration the one or more derived metrics and the selected home position, the operational map of the RoI, and correspondingly estimate a coverage area and a viewing area associated with the UAV.

In an aspect, for monitoring a target present in the RoI, the controller may determine at least one position in three-dimensional (3D) space associated with the generated operational map for maneuvering the UAV in order to get the best view of said target.

In one aspect, for ensuring suitability of manoeuvring the UAV within the coverage area associated with the home location, the controller may be configured to: check the no fly zone polygon data and the elevation data associated with the coverage area; generate multiple coverage area lines, and further draw said lines on the geographic map, taking into consideration a pre-defined separation heading angle offset between each of the lines; determine above ground level (AGL) altitude of multiple sample points on the generated coverage area lines, separated from each other by a first sampling distance, with respect to the home location; and select, by comparing AGL altitude of each of the sample points with previously determined AGL altitudes of all previous sampling points, the sample point present at the maximum AGL altitude, and correspondingly compute minimum safe altitude, and minimum safe line of sight altitude for each of the sample points, wherein distinct AGL altitudes may be represented with different colors.

In an aspect, in case, any of the sampled points is determined to intersect no fly zone, the controller may be configured to discard said sampled point and stop processing corresponding line.

In another aspect, in case, the determined maximum AGL altitude of a sample point exceeds a threshold AGL altitude, the controller may be configured to discard said sampled point and stop processing corresponding line.

In an aspect, the controller may be configured to decide a colour for each of the sample points by taking into consideration ratio of the AGL altitude of corresponding points and the threshold AGL altitude.

In an aspect, for ensuring suitability of manoeuvring the UAV on the basis of given target, the controller may be configured to: allow the user to select a location of the target; and choose a pre-defined area having centre at the location of the target, wherein the area may be circular area with a custom-defined radius for searching suitable viewing point, wherein multiple viewing points may be sampled and determined from the home location on the geographical map by taking into consideration a second sampling distance.

In an aspect, in case distance between the home location and any of the viewing points exceeds a threshold range, the controller may be configured to discard said points.

In an aspect, in case path from the home location to any of the viewing points intersects a no fly zone or any obstruction, the controller may be configured to discard said points

In an aspect, the controller may be configured to decide a colour for each of the sampled viewing points using the ratio of computed viewing slant range for corresponding points and the maximum slant range till which the targets may be clearly resolved by camera payload of the UAV.

In an aspect, the controller may be configured to validate suitability of the selected home position for take-off of the UAV; wherein, in case the selected home position is not validated, the system may automatically suggest to the user, one or more suitable home positions lying within a pre-defined area from the selected home position.

In an aspect, the system may be configured to generate the operational map before initiating maneuvering of the UAV.

In an aspect, the system may include an image acquisition unit positioned at a pre-defined position on the UAV, and operatively coupled to the controller, such that the plurality of image-frames of the RoI, acquired by the image acquisition unit may be transmitted to the controller. The image acquisition unit may be a camera, which can rotate 360 degrees capturing the ROI effectively. Further, the controller may be a ground-based control system, which may control parameters associated with the camera, where the parameters can include camera pan and tilt angle.

Another aspect of the present disclosure pertains to a method for assisting an Unmanned Aerial Vehicle (UAV) in generating an operational map of a Region of Interest (RoI). The method includes: (i) obtaining, at a controller, a geographical map of the RoI from a navigation unit; (ii) extracting, at the controller, data associated with the RoI from the obtained geographical map, wherein the data includes no fly zone polygon data, elevation data, latitude and longitude of the RoI; (iii) acquiring, at the controller, a plurality of image frames of the RoI; (iv) deriving, at the controller, one or more metrics by merging the extracted data with the acquired image frames; (v) allowing a user to select, through a human-machine interface (HMI), a home position of the UAV within the RoI; and (vi) generating, at the controller, the operational map of the RoI by taking into consideration the one or more derived metrics and the selected home position, and correspondingly estimating a coverage area and a viewing area associated with the UAV.

In an aspect, for monitoring a target present in the RoI, the method may include determining at least one position in three-dimensional (3D) space associated with the generated operational map for maneuvering the UAV in order to get the best view of said target.

In one aspect, for ensuring suitability of manoeuvring the UAV within the coverage area associated with the home location, the method may include: checking the no fly zone polygon data and the elevation data associated with the coverage area; generating multiple coverage area lines, and further drawing said lines on the geographic map, taking into consideration a pre-defined separation heading angle offset between each of the lines; determining above ground level (AGL) altitude of multiple sample points on the generated coverage area lines, separated from each other by a first sampling distance, with respect to the home location; and selecting the sample point present at the maximum AGL altitude by comparing AGL altitude of each of the sample points with previously determined AGL altitudes of all previous sampling points, and correspondingly computing minimum safe altitude and minimum safe line of sight altitude for each of the sample points, wherein distinct AGL altitudes may be represented with different colors, decided taking into consideration ratio of the AGL altitude of corresponding points and a threshold AGL altitude.

In an aspect, the method may include discarding one or more of the multiple determined sampled points, in case: said sampled points are determined to intersect no fly zone; and/ or the determined maximum AGL altitude of said sampled points exceeds the threshold AGL altitude. The method may further include terminating processing of the coverage area lines including any of said points.

In another aspect, for ensuring suitability of manoeuvring the UAV on the basis of given target, the method may include: allowing the user to select a location of the target; and choosing a pre-defined area having centre at the location of the target, wherein the area may be a circular area with a custom-defined radius for searching suitable viewing point, and multiple viewing points may be sampled and determined from the home location on the geographical map by taking into consideration a second sampling distance, and a colour may be decided for each of the sampled viewing points using the ratio of computed viewing slant range for corresponding points and the maximum slant range till which the target may be clearly resolved by camera payload of the UAV.

In an aspect, the method may include discarding one or more of the multiple viewing points, in case: distance between the home location and any of the viewing points exceeds a threshold range; and/ or path from the home location to any of the viewing points intersects a no fly zone or any obstruction.

In an aspect, the method may include validating suitability of the selected home position for take-off of the UAV; wherein, in case the selected home position is not validated, the method may further include automatically suggesting to the user, one or more suitable home positions lying within a pre-defined area from the selected home position.

In an aspect, the method may include generating the operational map before initiating maneuvering of the UAV.

Yet another aspect of the present disclosure pertains to an Unmanned Aerial Vehicle (UAV) generating an operational map of a Region of Interest (RoI). The UAV includes a rotatable camera and a controller in communication with the camera. The camera is configured to acquire a plurality of image frames of the ROI. The controller is configured to: obtain, through a navigation unit, a geographical map of the RoI; extract, from the obtained geographical map, data associated with the RoI, wherein the data includes no fly zone polygon data, elevation data, latitude and longitude of the RoI; derive one or more metrics by merging the extracted data with the acquired image frames; allow a user to select, through a human-machine interface (HMI) in communication with the UAV, a home position of the UAV within the RoI; and generate, by taking into consideration the one or more derived metrics and the selected home position, the operational map of the RoI, and correspondingly estimate a coverage area and a viewing area associated with the UAV; wherein, for monitoring a target present in the RoI, the controller determines at least one position in three-dimensional (3D) space associated with the generated operational map for maneuvering the UAV in order to get the best view of said target.

In an aspect, for ensuring suitability of manoeuvring the UAV within the coverage area associated with the home location, the controller may be configured to: check the no fly zone polygon data and the elevation data associated with the coverage area; generate multiple coverage area lines, and further draw said lines on the geographic map, taking into consideration a pre-defined separation heading angle offset between each of the lines; determine above ground level (AGL) altitude of multiple sample points on the generated coverage area lines, separated from each other by a first sampling distance, with respect to the home location; and select, by comparing AGL altitude of each of the sample points with previously determined AGL altitudes of all previous sampling points, the sample point present at the maximum AGL altitude, and correspondingly compute minimum safe altitude, and minimum safe line of sight altitude for each of the sample points, wherein distinct AGL altitudes may be represented with different colors, decided by taking into consideration ratio of the AGL altitude of corresponding points and a threshold AGL altitude.

In another aspect, for ensuring suitability of manoeuvring the UAV on the basis of given target, the controller may be configured to: allow the user to select a location of the target; and choose a pre-defined area having centre at the location of the target, wherein the area may be a circular area with a custom-defined radius for searching suitable viewing point, wherein multiple viewing points may be sampled and determined from the home location on the geographical map by taking into consideration a second sampling distance; and a colour may be decided for each of the sampled viewing points using the ratio of computed viewing slant range for corresponding points and the maximum slant range till which the target may be clearly resolved by camera payload of the UAV.

In yet another aspect, the controller may be configured to validate suitability of the selected home position for take-off of the UAV; wherein, in case the selected home position is not validated, the controller may automatically suggest to the user, one or more suitable home positions lying within a pre-defined area from the selected home position.

### BRIEF DESCRIPTION OF DRAWINGS

The accompanying drawings are included to provide a further understanding of the present disclosure and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.
FIG. 1 illustrates an exemplary network architecture of the proposed advanced pilot assistance systems (APAS) for generating an operational map, and correspondingly estimating coverage area and viewing area, in order to elaborate its overall working, in accordance with an embodiment of the present invention.
FIG. 2 illustrates an exemplary block diagram representing functional units of a controller associated with the APAS, in accordance with an embodiment of the present invention.
FIG. 3A illustrates an exemplary representation of the home location/take-off location of a UAV associated with the APAS, in accordance with an embodiment of the present invention.
FIGs. 3B and 3C illustrate various characteristics associated with the area coverage with respect to the home location/take-off location, in accordance with an embodiment of the present invention.
FIGs. 4A and 4B illustrate exemplary diagrams representing coverage area covered by the proposed system, in accordance with an embodiment of the present invention.
FIG. 5 illustrates an exemplary diagram representing characteristics associated with viewing area, in accordance with an embodiment of the present invention.
FIGs. 6A and 6B illustrate exemplary diagrams representing viewing area covered by the proposed system, in accordance with an embodiment of the present invention.
FIG. 7 illustrates an exemplary flow diagram of the proposed method for generating an operational map, and correspondingly estimating coverage area and viewing area, in accordance with an embodiment of the present invention.
FIGs. 8A and 8B illustrate exemplary diagrams associated with checking take-off suitability of the UAV 104, in accordance with an embodiment of the present invention

### DETAILED DESCRIPTION OF THE PRESENT INVENTION

The following is a detailed description of embodiments of the disclosure represented in the accompanying drawings. The disclosed embodiments are merely exemplary of the invention, which may be embodied in various forms. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

The present disclosure relates to the field of navigation of UAVs. More particularly, the present disclosure relates to the advanced pilot assistance systems (APAS) for UAVs for estimating coverage area and viewing area and a method thereof.

Embodiments of the present disclosure relate to smart, efficient, and user-friendly solutions for facilitating uninterrupted maneuvering of an UAV over any terrain, even over unknown and complex terrains. Data related to the terrain is pre-loaded through a navigation system, such as GPS, and then by mapping images, captured through a camera associated with the UAV, with the pre-loaded data, an operational map of the terrain is created. In case, a pilot of the UAV selects a particular home location, then the operational map is generated by taking the home location as the centre. A user-friendly view of the operational map can be created by representing distinct flying altitudes for the UAV with different colors.

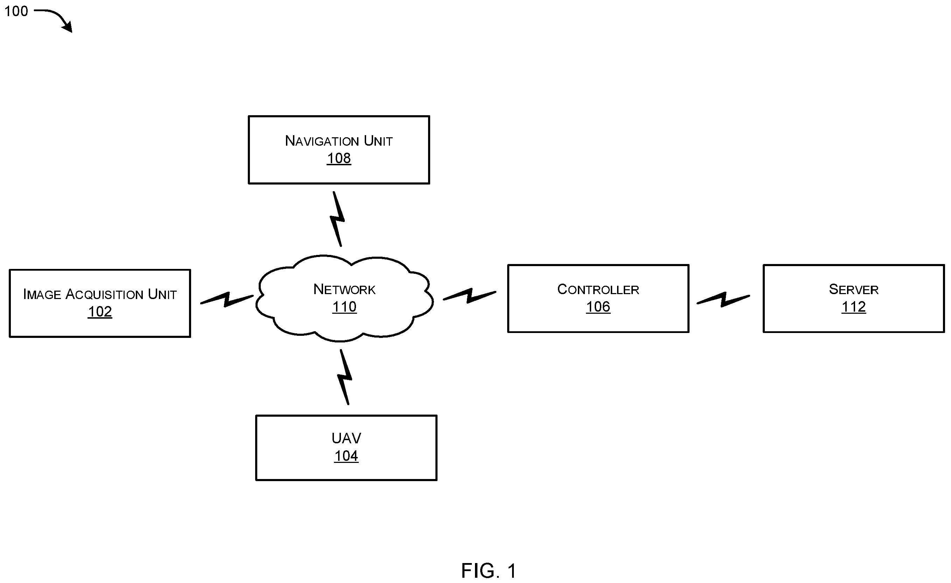

Referring to FIG. 1, the proposed advanced pilot assistance system 100 (also, referred to as system 100, or APAS 100, herein) can be configured to create an operational map for an Unmanned Aerial Vehicle 104 (UAV 104). The system 100 can be preferably used to operate the UAV 104 in a complex terrain that has different flying altitudes. Further, the system 100 can also be used to find no fly zones in the generated operational map. Therefore, the system 100 can enable uninterrupted manoeuvring of the UAV 104 by determining characteristics of said terrain beforehand.

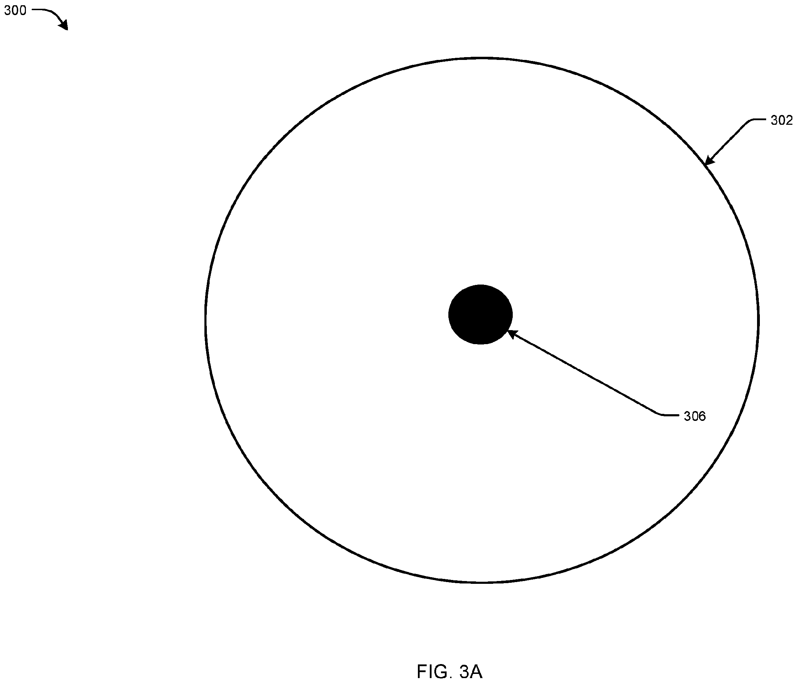

In an embodiment, the system 100 includes a Ground Control System (GCS) 106 (also, referred to as controller 106, herein) in operation with the UAV 104, where a UAV operator/ user/ pilot can feed the home/take-off location information through the controller 106.Further, the controller 106 can extract no fly zone polygon data and elevation data of the home location/take-off location and its surrounding area by taking into consideration the received information, where the no fly zone polygon data can pertain to data related to a region surrounding the home location/take-of location called the area coverage 302, as illustrated in diagram 300 in FIG. 3A, where manoeuvring/ flying of the UAV 104 is prohibited, and the elevation data can pertain to data related to varying altitudes of the terrain and respective height with respect to sea-level. The area coverage 302 is the maximum area that a UAV can travel to and fro based on its home/take-off position, battery/endurance and altitude characteristics. Further, the system 100 can estimate characteristics of the area coverage 302 based on the extracted no fly zone polygon data and elevation data, and correspondingly draw features associated with the estimated characteristics of the area coverage 302 on a geographic map view for representing the suitability of flying to a particular location in the flight area.

In an embodiment, the ASAP 100 can generate an operational map for the UAV 104 by firstly pre-loading the geographic map view as well as altitude related data before initiating manoeuvering of the UAV 104. Then, the ASAP 100 can facilitate selection of a home position by a user, say a pilot/ person controlling the system 100, where the home position may pertain to a pre-defined position from which manoeuvring of the UAV 104 may take-off and may act as a center point based on which the operational map can be generated.

Further, the ASAP 100 can extract altitude/ Mean Sea Level altitude (MSL) data, battery data, and latitude and longitude of the home position associated with the UAV 104. Further, the ASAP 100 can analyse the areas in the complex terrain where the UAV 104 can manoeuvre through, based on latitude-longitude data of the terrain, terrain's elevation data from the preloaded map, presence of obstacles within the UAV's coverage area, line-of-sight information between the UAV and GCS, and no-fly zone data.

In another embodiment, for monitoring a specific target, the APAS 100 can estimate at least one position in three-dimensional (3D) space, where the UAV 04 could be manoeuvred in order to get the best view of said target.

The target position data can be provided to the UAV either by feeding the latitude-longitude data directly through the Ground Control System (GCS) 106 or using an image acquisition unit 102 that can be configured to acquire a number of image frames of a Region of Interest (ROI) pertaining to the target. In an exemplary embodiment, the image acquisition unit 102 can be a camera that may rotate 360 degrees and thus capture the ROI region effectively. In another embodiment, the system 100 can include a navigation unit 108 that can be configured to provide information related to the ROI of the target. In an exemplary embodiment, the navigation unit 108 can include any or a combination of Global Positioning Unit (GPS) module, Global Navigation Satellite System (GLONASS) module, Navigation Indian Constellation (NAVIC) module, and the like.

In an embodiment, the Ground Control System 106 can be operatively coupled with the image acquisition unit 102, the navigation unit 108, and the UAV 104. The acquired image frames of the ROI as well as the information related to the like latitude and longitudinal data, provided by the navigation unit 108 can be transmitted to the controller 106, where a transceiver associated with the controller 106 can receive the transmitted image frames and information. Further for this image acquisition unit based target ROI estimation, data related to UAV location, camera pan and tilt angle, UAV AGL altitude, elevation data and more may be required.

In an implementation, the APAS 100 can estimate a position in three-dimensional (3D) space by obtaining data related to latitude-longitude of the target and its surrounding terrain, elevation of the target, and its surrounding terrain, line-of-sight of the UAV to the target, presence of obstacle between the UAV and the target, line-of-sight information between the UAV 104 and the GCS 106, and no-fly zone data.

In yet another embodiment, the APAS 100 can be configured to represent various altitude areas feasible for manoeuvring the UAV 104 in the terrain with different colours. In an exemplary embodiment, the APAS 100 can represent different altitude areas in the generated operational area by distinct colours for instance, red colour, green colour, and yellow colour. The red colour may be used to indicate the maximum possible Above Ground Level (AGL), and in corresponding area the UAV 104 is required to manoeuvre up to its maximum possible AGL. The green colour may be used to indicate that the UAV 104 is required to manoeuvre up to one-third of its maximum possible AGL.

Further, in yet another embodiment, the APAS 100 can be configured to predict the coverage area (i.e.,) the suitability of the flying over the area coverage 302 and viewing area for the target, from the UAV 104.

In an embodiment, the system 100 can include a "Take-off Suitability Check" feature that may recommend if the Launchpad/Home location selected is suitable for take-off or not. In case, a particular home location is not found suitable for the take-off, then the "Take-off Suitability Check" feature may help the user to identify suitable locations for take-off around said home location. Also, said feature may suggest if a marked Home position is suitable for a conventional Take-off or it requires a Take-off Approach (TOA) point. In case, a TOA point is required for the Home position, then the GCS 106 may suggest several TOA points within 500 m to 2500 m distance from the Home position based on the elevation of the terrain. Once TOA is created around the area, the GCS 106 may allow the UAV 104 to take-off.

Further, if the marked Home position is not suitable for Take-off with or without TOA, then the "Take-off Suitability Check" feature may suggest an alternate Home position which may be suitable for Take-off. In an implementation, the home position is chosen such that the area of interest to be captured by the UAV 104 falls within the range of the UAV 104/ area coverage of the UAV 104.

Further, on completion of the Take-off suitability check, the system 100 can activate an "Estimate Coverage Area feature" that can be used to check suitability of flying the UAV 104 from its Home position and within its area coverage. Furthermore, on completion of the "Estimate Coverage Area feature", the system 100 may trigger "Estimate Viewing coverage feature" to check suitability of manoeuvring the UAV 104 for surveillance of a specific target and whether said target can be seen properly.

In an embodiment, the controller 106 can be in communication with the image acquisition unit 102, the navigation unit 108, and the UAV 104, through a network 110. Further, the network 110 can be a wireless network, a wired network or a combination thereof that can be implemented as one of the different types of networks, such as Intranet, Local Area Network (LAN), Wide Area Network (WAN), Internet, and the like. Further, the network 110 can either be a dedicated network or a shared network. The shared network can represent an association of different types of networks that can use variety of protocols, for example, Hypertext Transfer Protocol (HTTP), Transmission Control Protocol/Internet Protocol (TCP/IP), Wireless Application Protocol (WAP), and the like.

In an embodiment, the controller 106 can be implemented using any or a combination of hardware components and software components such as a cloud, a server 112, a computing system, a computing device, a network device and the like. Further, the controller 106 can interact with the image acquisition unit 102, the navigation unit 108, and the UAV 104 through a website or an application that can reside in the proposed system 100. In an implementation, the APAS 100 can be accessed by website or application that can be configured with any operating system, including but not limited to, Android^{™}, iOS^{™}, and the like.

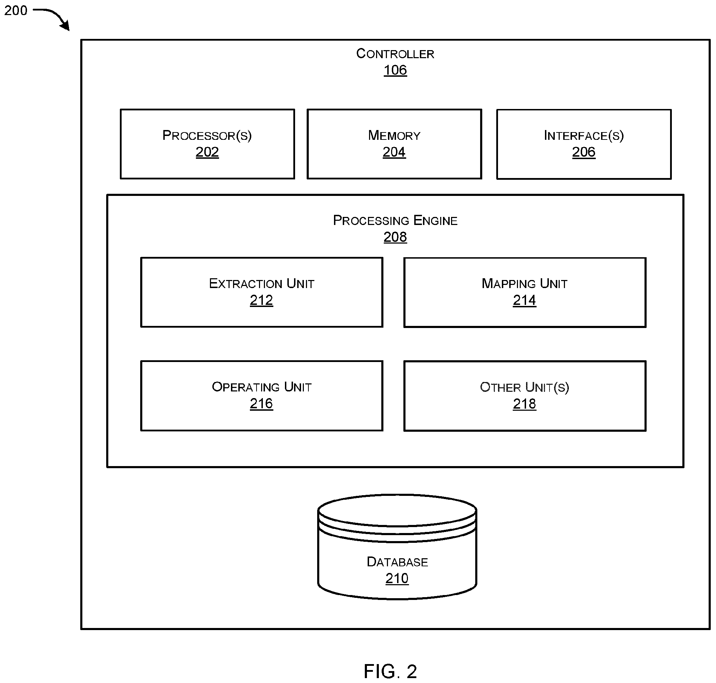

Referring to FIG. 2, block diagram 200 depicts exemplary functional units of the controller 106 that can include one or more processor(s) 202, memory 204, interface(s) 206, processing engine(s) 208, and database 210. The one or more processor(s) 202 can be implemented as one or more microprocessors, microcomputers, microcontrollers, digital signal processors, central processing units, logic circuitries, and/or any devices that manipulate data based on operational instructions. Among other capabilities, the one or more processor(s) 202 are configured to fetch and execute computer-readable instructions stored in a memory 204 of the controller 106. The memory 204 can store one or more computer-readable instructions or routines, which may be fetched and executed to create or share the data units over a network service. The memory 204 can include any non-transitory storage device including, for example, volatile memory such as RAM, or non-volatile memory such as EPROM, flash memory, and the like.

In an embodiment, the controller 106 can also include an interface(s) 206. The interface(s) 206 may include a variety of interfaces, for example, interfaces for data input and output devices, referred to as I/O devices, storage devices, and the like. The interface(s) 206 may facilitate communication of the controller 106 with various devices coupled to the controller 106. The interface(s) 206 may also provide a communication pathway for one or more components of the controller 106. Examples of such components include, but are not limited to, processing engine(s) 208 and database 210.

In an embodiment, the processing engine(s) 208 can be implemented as a combination of hardware and programming (for example, programmable instructions) to implement one or more functionalities of the processing engine(s) 208. In examples described herein, such combinations of hardware and programming may be implemented in several different ways. For example, the programming for the processing engine(s) 208 may be processor executable instructions stored on a non-transitory machine-readable storage medium and the hardware for the processing engine(s) 208 may include a processing resource (for example, one or more processors), to execute such instructions. In the present examples, the machine-readable storage medium may store instructions that, when executed by the processing resource, implement the processing engine(s) 208. In such examples, the controller 106 can include the machine-readable storage medium storing the instructions and the processing resource to execute the instructions, or the machine-readable storage medium may be separate but accessible to the controller 106 and the processing resource. In other examples, the processing engine(s) 208 may be implemented by electronic circuitry. The database 210 can include data that is either stored or generated as a result of functionalities implemented by any of the components of the processing engine(s) 208.

In an embodiment, the processing engine(s) 208 can include an extraction unit 212, a mapping unit 214, an operating unit 216, and other unit(s) 218. The other unit(s) 218 can implement functionalities that supplement applications or functions performed by the controller 106 or the processing engine(s) 208.

According to an embodiment, the extracting unit 212 can extract no fly zone polygon data and elevation data of the area coverage302 pertaining to a complex terrain by taking into consideration the home location/ take-off position date fed to the ground control system or controller, where the no fly zone polygon data can pertain to data related to a region surrounding 302 the home location/take-of location called the area coverage 302, where manoeuvring/ flying of the UAV 104 is prohibited, and the elevation data can pertain to data related to varying altitudes of the terrain and respective height with respect to sea-level.

In an embodiment, the extracting unit 212 can extract altitude/ Mean Sea Level altitude (MSL) data, battery data and latitude and longitude of the home position associated with the UAV 104. Further, the APAS 100 can analyse the areas in the complex terrain where the UAV 104 can manoeuvre through, based on latitude-longitude data of the terrain, terrain's elevation data from the preloaded map, presence of obstacle within the UAV's coverage area, line-of-sight information between the UAV and GCS, and no-fly zone data. The extracting unit 212 can also extract data related to a specific target present within the AOI.

According to another embodiment, the mapping unit 214 can create/ generate an operational map based on the extracted data by merging it using various biased and linear techniques. The mapping unit 214 can also generate the operational map for the UAV 104 by pre-loading the geographic map view as well as altitude related data before initiating manoeuvring of the UAV 104.

### Generating Coverage Area

In an embodiment, the mapping unit 214 can generate the suitability of flying within the area coverage 302 associated with the home/take-off position 306 which is chosen by the user for the UAV. In an embodiment, for generating the flying suitability of the UAV in the area coverage called the coverage area, first of all, a home position 306 (also, referred to as home location, herein) can be selected for the UAV 104. Further, the mapping unit 214 can ensure that the no fly zone polygon data and elevation data exist in a circular region 302 with a pre-defined radius (R), where said radius may pertain to the maximum range of the UAV 104, for instance in meters. This circular region is the maximum area that a UAV can travel to and fro based on its home/take-off position, battery/endurance and altitude characteristics. Further, the mapping unit 214 can generate multiple coverage area lines that can be drawn on a geographic map view corresponding to a pre-defined separation heading angle offset between each line. In an exemplary embodiment, a separation heading angle of 1 degree can be used to generate 360 lines over the map.

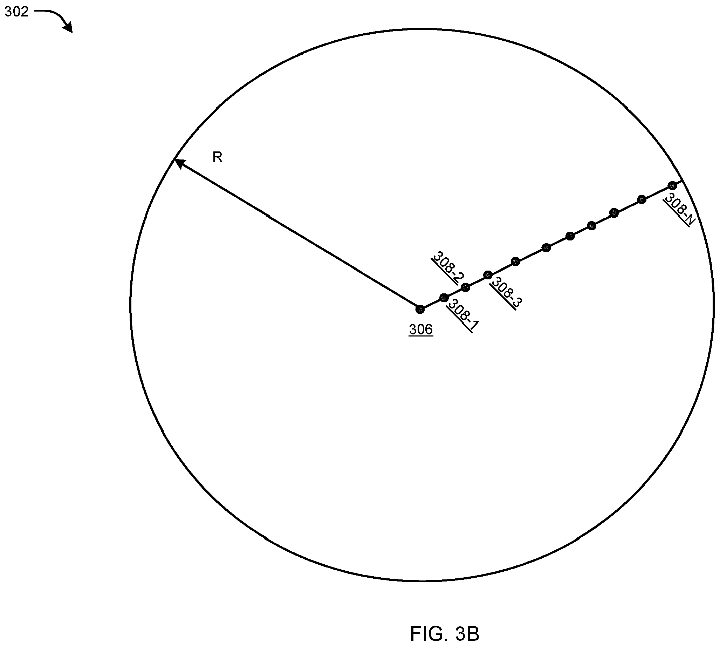

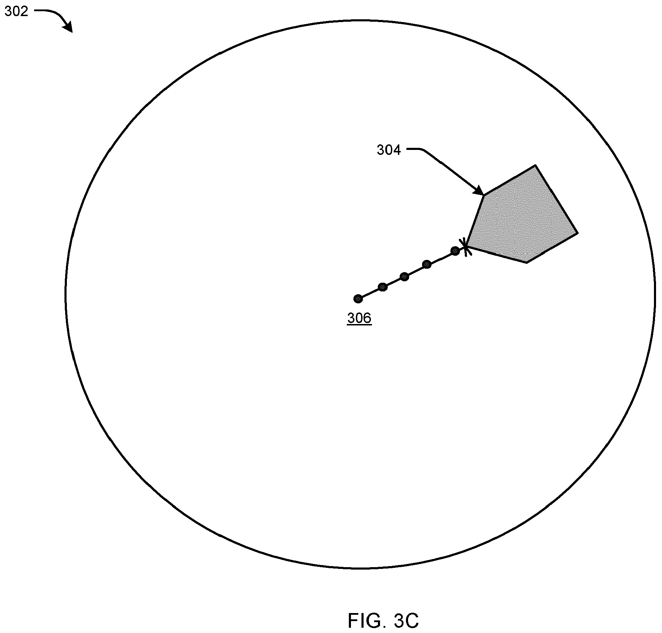

In an implementation, as illustrated in FIG. 3B, the mapping unit can utilize a sampling distance (delta, say 100 m) to determine the altitude with respect to the home location 306 (AGL altitude) at sampling points 308-1, 308-2, 308-3... 308-N (collectively, referred to as sampling points 308, and individually, referred to as sampling point 308, herein) along the line till radius R, where the home location can act as a center point 306. Further, the mapping unit 214 can determine if the sampled point intersects no fly zone 304, as illustrated in FIG. 3C. In case, the sampled point 308 is determined to intersect the no fly zone 304, the mapping unit 214 can discard the sampled point 308 and stop processing the corresponding line.

Further, for a sampled point, compute AGL altitude as the maximum amongst one of the previously computed AGL altitude for all previous sampling points, minimum safe altitude, and minimum safe line of sight altitude, where the minimum safe altitude along the path from the home location to the sampled point 308 for terrain avoidance that is computed using elevation data. Furthermore, the minimum safe line of sight altitude can be described as the minimum altitude required to ensure radio communication exists between the GCS and the UAV 104 at the sampled point 308 using the elevation data.

In an embodiment, if the computed AGL altitude exceeds the maximum AGL altitude supported by the UAV 104, the mapping unit 214 can discard the sampled point 308 and stop processing the corresponding line.

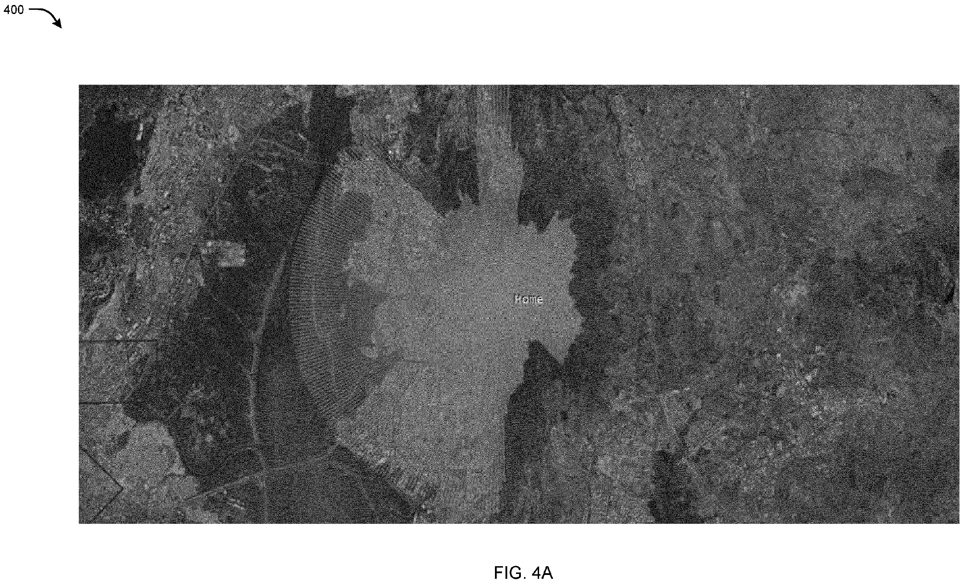

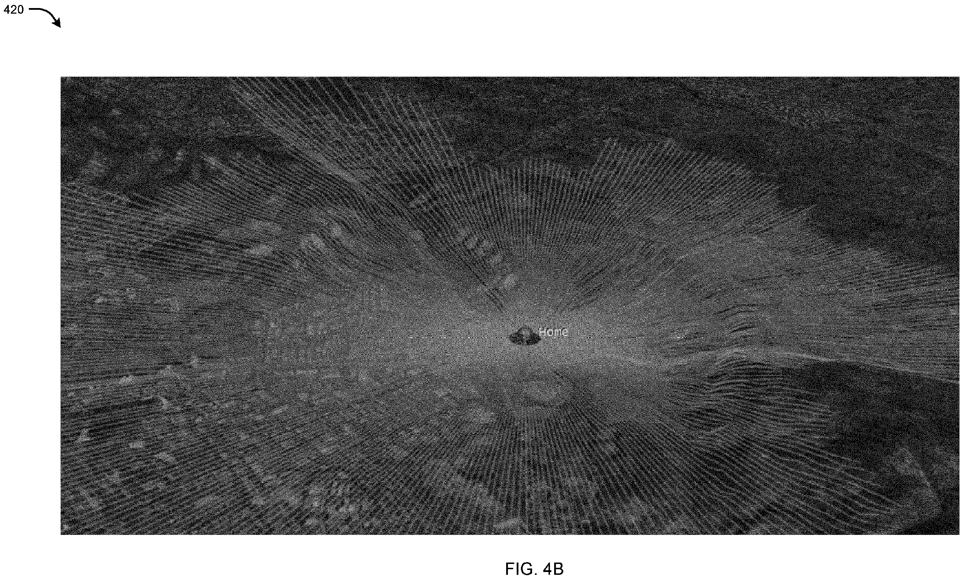

In another embodiment, the mapping unit 214 can decide a colour for the sampled point 308 based on the ratio of the computed AGL altitude and the maximum AGL altitude supported by the UAV 104, where the ratio between 0.0 and 1.0 can be divided into distinct sections, for instance, less than 0.33, between 0.33 to 0.66, and 0.66 to less than or equal to 1.0, and correspondingly assign colours such as green, orange, and red, respectively to each section, as illustrated in FIGs. 4A and 4B. In an exemplary embodiment, the FIG. 4A represents 3D view 400 of the operational map, of the area coverage, having different altitudes depicted with distinct colours, and the FIG. 4B represents 2D view 420 of said map. Each colour may indicate the AGL required to reach the sampled point 308, where lower ratio values indicate the ease of manoeuvring the UAV 104 to the sampled point 308. Furthermore, the mapping unit 214 can connect the sampled point 308 with the decided colour with the previously sampled point using a line path.

### Generating Viewing Area

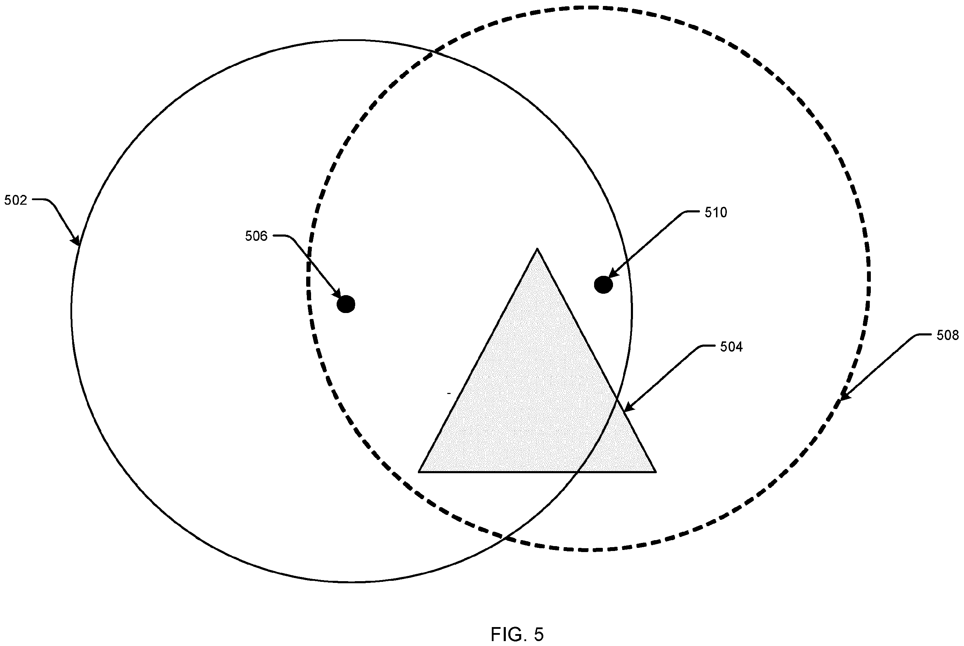

Referring to Fig. 5, the mapping unit 214 can generate viewing area associated with home/ take-off position 506, where the mapping unit 214 can determine suitability of manoeuvring the UAV 104 based on a given target 510 for surveillance and whether the given target can be seen properly. In an embodiment, for generating the viewing area, first of all, the home location 506 can be selected for the UAV 104 by the UAV user/pilot. Further, the mapping unit 214 can ensure that the no fly zone polygon data and elevation data exists in a circular region 502 with a pre-defined radius (R), where said radius may pertain to the maximum range of the UAV 104, for instance in meters from the home location 506. Further, the - a Point Of Interest (POI) location 510 of the target within the maximum range of the UAV 104 can be selected by the UAV user/pilot. The mapping unit 214 can further choose a circular search area 508 that has the center at the POI, which has a custom defined radius for searching suitable viewing points

The viewing points are determined from the home/take-off location 506 on a geographic map view using a sampling distance, for instance 25 metres, between said points.

In an embodiment, if the distance between the home location and viewing point exceeds the maximum range of the UAV 104, then the mapping unit 214 can discard said sample point. Further, if path from the home location to the viewing point intersects a no fly zone or any obstruction 504, then the mapping unit 214 can further discard said point.

In an embodiment, for the sampled viewing point, the mapping unit 214 can compute AGL altitude as the maximum amongst minimum safe altitude along the path from the home location to the sampled viewing point, minimum safe line of sight altitude, and minimum safe visual line of sight altitude. In an embodiment, the minimum safe altitude along the path from the home location to the sampled viewing point for terrain avoidance can be computed using the elevation data, and the minimum safe line of sight altitude can be calculated as an altitude required to ensure radio communication exists between the GCS 106 and the UAV 104 at the sampled viewing point using the elevation data. Further, the minimum safe visual line of sight altitude can be computed as an altitude required to ensure that the POI location can be observed from the sampled viewing point using the elevation data.

In an embodiment, if the computed AGL altitude exceeds the maximum AGL altitude supported by the UAV 104, the mapping unit 214 can discard the sampled viewing point 308. Further, using the computed AGL at a sampled viewing point, the mapping unit 214 can compute the viewing slant range i.e. 3D distance between the POI location along the terrain and the sampled viewing point.

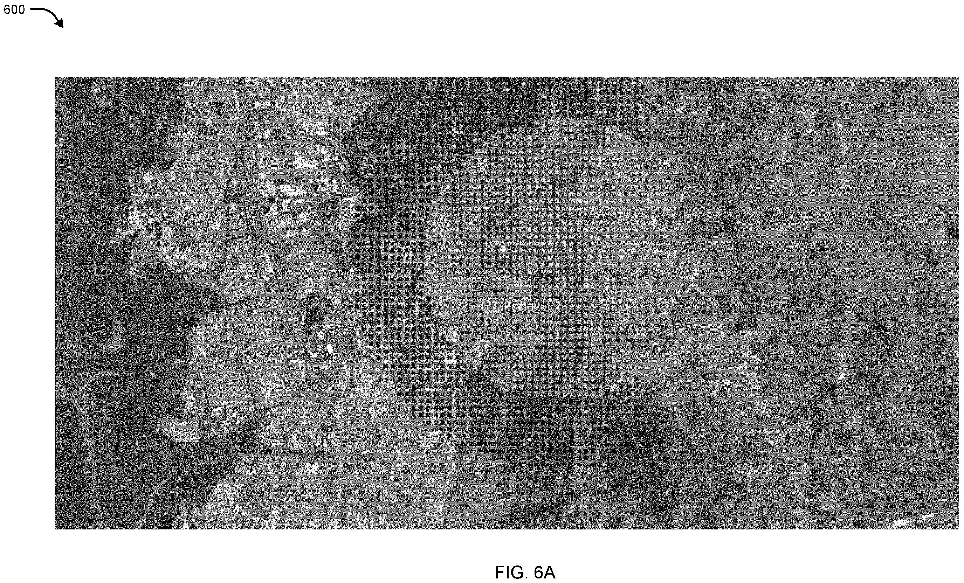

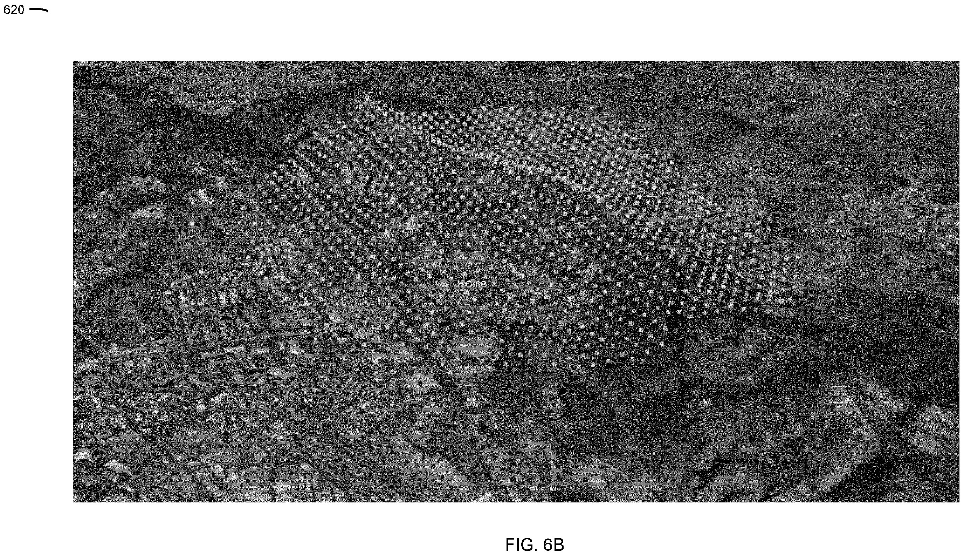

In another embodiment, the mapping unit 214 can decide a colour for the sampled viewing point 308 using the ratio of the computed viewing slant range and the maximum slant range till which targets can be clearly resolved by the UAV camera payload, where the ratio between 0.0 and 1.0 can be divided into various sections, for instance, less than 0.33, between 0.33 to 0.66, and 0.66 to less than or equal to 1.0, and correspondingly assign colours such as green, orange, and red, respectively to indicate the viewing slant range required from the viewing point to the POI location, as illustrated in FIGs. 6A and 6B. In an exemplary embodiment, the FIG. 6A represents 3D view 600 of the viewing area of the operational map of the target POI, and the FIG. 6B represents 2D view 620 of the viewing area of said map. Further, each colour may indicate a distinct viewing slant range, where lower ratio values indicate better visibility of the POI location. However, if the ratio exceeds 1.0, the mapping unit 214 can discard the point.

According to yet another embodiment, the operating unit 216 can be in communication with the UAV 104 such that it can operate the UAV 104, and hence facilitate easy and smooth manoeuvring of the UAV 104 based on the operational map.

In an embodiment, for checking take-off suitability, firstly a Home location can be selected for the UAV 104. Further, the operating unit 216 can ensure that No Fly zone polygon data and elevation data exists in a circular region associated with the Home location and having a radius R = Maximum range of the UAV in meters.

In one embodiment, if it is found that the Home location lies within a No Fly zone or Home location MSL elevation exceeds maximum allowed take-off MSL elevation, then the operating unit 216 can conclude that the current Home location is not suitable for take-off. In other embodiment, if the UAV type is a quadcopter, then the current Home location is suitable for the take-off.

In another embodiment, if the UAV type is a hybrid UAV that that takes off like a quadcopter in Vertical take-off and landing (VTOL) mode before transitioning to fixed-wing mode, then in such a case, the operating module 214 can firstly determine the minimum safe AGL altitude for terrain avoidance, which may be computed using elevation data in a circle with center point as Home and radius equal to the orbit radius of the UAV.

Further, if value of the determined safe AGL altitude is higher than either of the minimum safe AGL altitudes required by the UAV for orbiting around Home after the take-off or during landing, then the operating unit 216 can conclude that the current Home location is not suitable for take-off, else it is concluded to be suitable for take-off.

In an implementation, the minimum safe AGL altitude required by the UAV 104 for orbiting around Home after take-off is generally much lower than the minimum safe AGL altitude required by the UAV 104 for orbiting around Home during landing as the UAV 104 cannot climb to a very high AGL altitude in VTOL mode during take-off to prevent a very high workload from being applied to the VTOL motors of the UAV 104, which would also affect the endurance of the UAV 104.

In another embodiment, if the current Home location is not found suitable for orbiting around it after take-off, but is suitable for orbiting around it during landing, then the operating unit 216 can select a take-off approach (TOA) point. Further, if the TOA point does not lie within a minimum and maximum radius around the Home location determined by the UAV capability from where flight would not be possible from the Home location to the TOA point in the VTOL mode during the take-off, or if the path from Home to TOA lies within a passes through a No Fly zone, the operating unit 216 can again conclude that the selected TOA point is not suitable for allowing the take-off.

However, if the TOI point is found to be suitable, then the operating unit 216 can determine the minimum safe AGL altitude for terrain avoidance that may be computed using the elevation data along the path from the Home location to the TOA point including the orbit circle at TOA point, and if this value is higher than the minimum safe AGL altitude required by the UAV for flying from the Home location to the TOA point in the VTOL mode and orbiting at the TOA point, then again the TOA point is not suitable for allowing the take-off, else the combination of Home and TOA points are suitable for allowing the take-off.

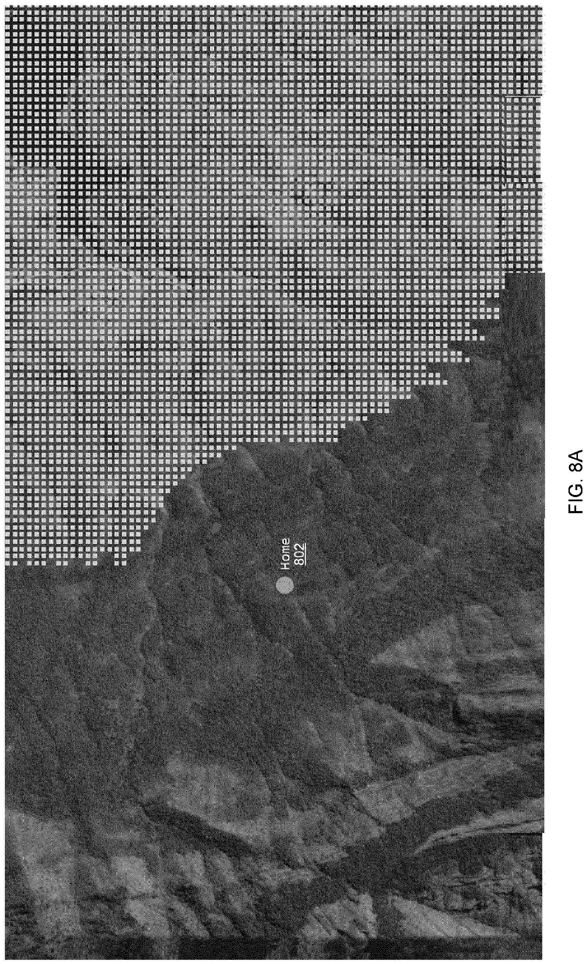

Further, if the selected TOA point is not suitable for allowing take-off, alternate TOA points can be searched in an automated manner in a circular area around the Home location using a sampling distance of 25 m between searched points such that each searched point lies within the minimum and maximum radius around the Home location 802 determined by the UAV capability from where flight would be possible from the Home location 802 to the TOA point in the VTOL mode, and suitable TOA points can be displayed on a geographic map view using a first pre-defined colour, as illustrated in FIG. 8A.

Furthermore, if the Home location 802 alone or the combination of Home location and TOA point are not suitable for allowing take-off, then the operating unit 216 can search alternate Home points using a sampling distance of say 25 m in a circular region with a user-defined maximum search radius around the currently selected Home location using the above mentioned logic.

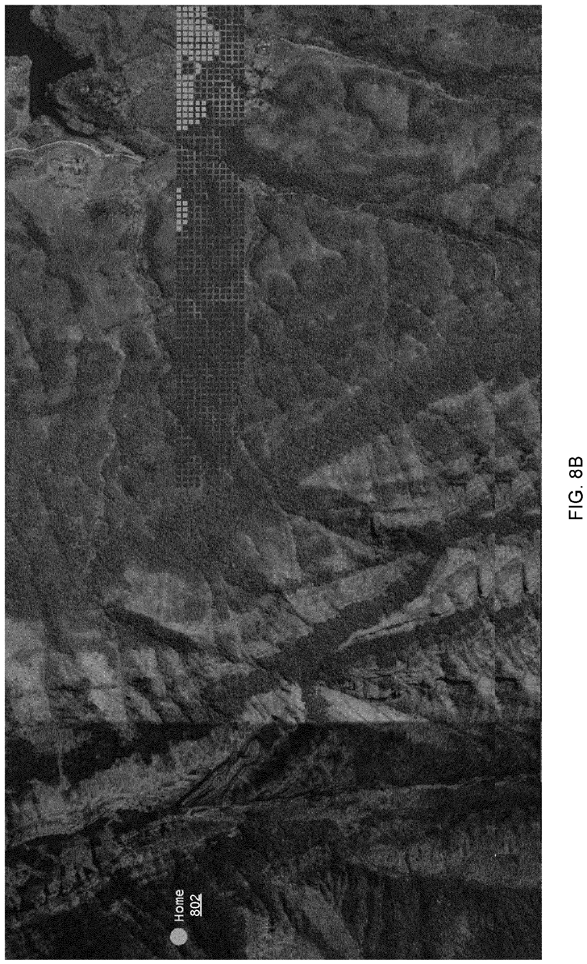

In an embodiment, if an alternate Home point is suitable for take-off without the requirement of a corresponding TOA point, the alternate Home point can be displayed on a geographic map view as a directly usable Home point using a second pre-defined colour, as illustrated in FIG. 8B. If the alternate Home point is also not suitable for the take-off, corresponding TOA points can be searched for it using the above mentioned logic, and if one or more TOA points are found for the alternate Home point, the alternate Home point can be displayed on a geographic map view as an indirectly usable Home point in a third pre-defined colour.

In another embodiment, a user can then select an alternate directly usable Home point as the final Home location or an alternate indirectly usable Home point that requires a TOA point as the final Home location.

It should be appreciated by a person skilled in the art that the concept used for TOA point can well be applied for landing as well using a landing approach (LOA) point, which is well within the scope of the invention.

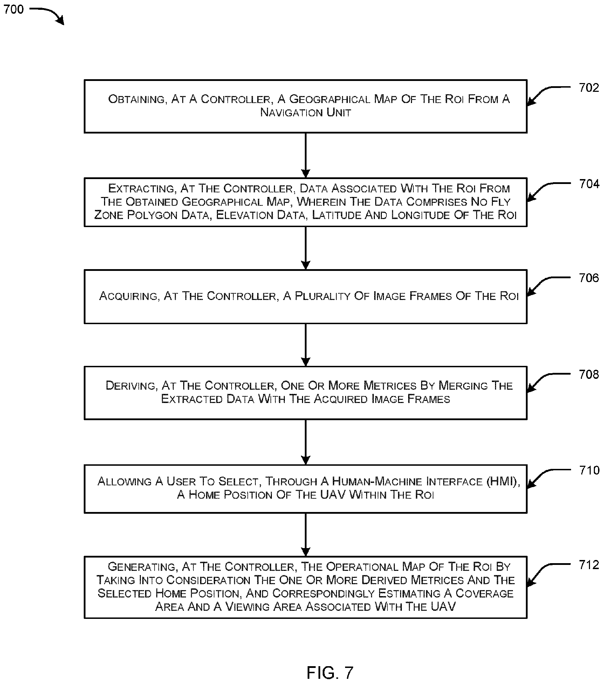

Referring to FIG. 7, the proposed method 700 (also, referred to as method 700, herein) can be utilized for assisting an Unmanned Aerial Vehicle (UAV) in generating an operational map of a Region of Interest (RoI). The method 700 includes the step 702 of obtaining, at a controller, a geographical map of the RoI from a navigation unit, and the step 704 of extracting, at the controller, data associated with the RoI from the geographical map, which is obtained at the step 702. The data may include no fly zone polygon data, elevation data, latitude and longitude of the RoI. The method 700 also includes the step 706 of acquiring, at the controller, a plurality of image frames of the RoI.

Further, the method 700 includes the step 708 of deriving, at the controller, one or more metrics by merging the extracted data with the acquired image frames.

In an embodiment, the method 700 includes the step 710 of allowing a user to select, through a human-machine interface (HMI), a home position of the UAV within the RoI. Furthermore, the method 700 includes the step 712 of generating, at the controller, the operational map of the RoI by taking into consideration the one or more derived metrics and the selected home position, and correspondingly estimating a coverage area and a viewing area associated with the UAV.

In an embodiment, for monitoring a target present in the RoI, the method 700 can include the step of determining at least one position in three-dimensional (3D) space associated with the generated operational map for maneuvering the UAV in order to get the best view of said target.

In one embodiment, for ensuring suitability of manoeuvring the UAV within the coverage area associated with the home location, the method 700 can include the following steps - firstly, checking the no fly zone polygon data and the elevation data associated with the coverage area; then generating multiple coverage area lines, and further drawing said lines on the geographic map, taking into consideration a pre-defined separation heading angle offset between each of the lines. Further, it includes determining above ground level (AGL) altitude of multiple sample points on the generated coverage area lines, separated from each other by a first sampling distance, with respect to the home location; and selecting the sample point present at the maximum AGL altitude by comparing AGL altitude of each of the sample points with previously determined AGL altitudes of all previous sampling points, and correspondingly computing minimum safe altitude and minimum safe line of sight altitude for each of the sample points, wherein distinct AGL altitudes are represented with different colors, decided taking into consideration ratio of the AGL altitude of corresponding points and a threshold AGL altitude.

Further, the method 700 can include the step of discarding one or more of the multiple determined sampled points, in case: (a) said sampled points are determined to intersect no fly zone; and/ or (b) the determined maximum AGL altitude of said sampled points exceeds the threshold AGL altitude. In said cases, the method 700 can include the step of terminating processing of the coverage area lines including any of said points.

In other embodiment, for ensuring suitability of manoeuvring the UAV on the basis of given target, the method700 can include the following steps - firstly, allowing the user to select a location of the target, and then choosing a pre-defined area having centre at the location of the target, wherein the area is circular area with a custom-defined radius for searching suitable viewing point, wherein multiple viewing points are sampled and determined from the home location on the geographical map by taking into consideration a second sampling distance, and a colour is decided for each of the sampled viewing points using the ratio of computed viewing slant range for corresponding points and the maximum slant range till which the target is clearly resolved by camera payload of the UAV.

Further, the method 700 can include the step of discarding one or more of the multiple viewing points, in case: (a) distance between the home location and any of the viewing points exceeds a threshold range; and/ or (b) path from the home location to any of the viewing points intersects a no fly zone or any obstruction.

In an embodiment, the method 700 can also include the step of validating suitability of the selected home position for take-off of the UAV. In case, the selected home position is not validated, the method 700 can further include automatically suggesting to the user, one or more suitable home positions lying within a pre-defined area from the selected home position.

In an embodiment, the method 700 can include the step of generating the operational map before initiating maneuvering of the UAV.

According to an embodiment, the present disclosure also discloses a UAV 104 for generating an operational map of a Region of Interest (RoI), which can act independently, and can carry out operations on its own. The UAV 104 can be equipped with a rotatable camera 102 and a controller 106, which are integrated within the UAV 104. The rotatable camera 102 can be configured to acquire a plurality of image frames of the ROI. Further, the controller 106 can be in communication with the camera 102, and can be configured to receive the acquired image frames from the camera 102.

In an embodiment, the UAV 104, via the controller 106, can obtain, through a navigation unit 108, a geographical map of the RoI; and then extract, from the obtained geographical map, data associated with the RoI, wherein the data can include no fly zone polygon data, elevation data, latitude and longitude of the RoI.

In another embodiment, the UAV 104, via the controller 106, can derive one or more metrics by merging the extracted data with the acquired image frames. Further, a user can be allowed to select, through a human-machine interface (HMI) in communication with the UAV 104, a home position of the UAV 104 within the RoI.

Further, the UAV 104 can generate, by taking into consideration the one or more derived metrics and the selected home position, the operational map of the RoI, and correspondingly estimate a coverage area and a viewing area associated with the UAV 104. Moreover, for monitoring a target present in the RoI, the controller 106 can determine at least one position in three-dimensional (3D) space associated with the generated operational map for maneuvering the UAV 104 in order to get the best view of said target.

In another embodiment, the controller 106 can be configured to validate suitability of the selected home position for take-off of the UAV 104; wherein, in case the selected home position is not validated, the controller 106 automatically suggests to the user, one or more suitable home positions lying within a pre-defined area from the selected home position.

In one embodiment, for ensuring suitability of manoeuvring the UAV 104 within the coverage area associated with the home location, the UAV 104 can be configured to:
- check the no fly zone polygon data and the elevation data associated with the coverage area;
- generate multiple coverage area lines, and further draw said lines on the geographic map, taking into consideration a pre-defined separation heading angle offset between each of the lines;
- determine above ground level (AGL) altitude of multiple sample points on the generated coverage area lines, separated from each other by a first sampling distance, with respect to the home location; and
- select, by comparing AGL altitude of each of the sample points with previously determined AGL altitudes of all previous sampling points, the sample point present at the maximum AGL altitude, and correspondingly compute minimum safe altitude, and minimum safe line of sight altitude for each of the sample points, wherein distinct AGL altitudes are represented with different colors, decided by taking into consideration ratio of the AGL altitude of corresponding points and a threshold AGL altitude.

In other embodiment, for ensuring suitability of manoeuvring the UAV 104 within on the basis of given target, the UAV 104 can be configured to:
- allow the user to select a location of the target; and
- choose a pre-defined area having centre at the location of the target, wherein the area is circular area with a custom-defined radius for searching suitable viewing point, wherein multiple viewing points are sampled and determined from the home location on the geographical map by taking into consideration a second sampling distance; and a colour is decided for each of the sampled viewing points using the ratio of computed viewing slant range for corresponding points and the maximum slant range till which the target is clearly resolved by camera payload of the UAV 104.

In some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable. The numerical values presented in some embodiments of the invention may contain certain errors necessarily resulting from the standard deviation found in their respective testing measurements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

Groupings of alternative elements or embodiments of the invention disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description of all the groups used in the appended claims.

While the foregoing describes various embodiments of the invention, other and further embodiments of the invention may be devised without departing from the basic scope thereof. The scope of the invention is determined by the claims that follow. The invention is not limited to the described embodiments, versions, or examples, which are included to enable a person having ordinary skill in the art to make and use the invention when combined with information and knowledge available to the person having ordinary skill in the art.

### ADVANTAGES OF THE PRESENT DISCLOSURE

The present invention provides an effective assistance to an Unmanned Aerial Vehicle (UAV) facilitating it to maneuver over an unknown and/ or complex terrain.

The present invention enables generate an operational map of the terrain.

The present invention estimates coverage area of the UAV and viewing area associated with a specific target, with the help of the operational map.

The present invention allows a user to select a home position, and correspondingly generates the operational map by considering the selected home position as a centre.

The present invention provides a user-friendly view of the operational map by representing distinct flying altitudes for the UAV with different colors.

The present invention facilitates in denoting a no fly zone in the generated operational map, which helps in avoiding unwanted flight interruptions.

The present invention provides a smart, efficient, and user-friendly system and method for assisting the UAV by estimating the coverage area and the viewing area.

## Claims

1. A system (100) for assisting an Unmanned Aerial Vehicle (UAV) (104) in generating an operational map of a Region of Interest (RoI), the system (100) comprising:
a controller (106) comprising a processor coupled with a memory, wherein the memory stores one or more instructions executable by the processor to:
obtain, through a navigation unit (108), a geographical map of the RoI;
extract, from the obtained geographical map, data associated with the RoI, wherein the data comprises no fly zone polygon data, elevation data, latitude and longitude of the RoI;
derive one or more metrics by merging the extracted data with a plurality of acquired image frames of the RoI;
allow a user to select, through a human-machine interface (HMI), a home position of the UAV (104) within the RoI; and
generate, by taking into consideration the one or more derived metrics and the selected home position, the operational map of the RoI, and correspondingly estimate a coverage area and a viewing area associated with the UAV (104).

2. The system (100) as claimed in claim 1, wherein for monitoring a target present in the RoI, the controller (106) determines at least one position in three-dimensional (3D) space associated with the generated operational map for maneuvering the UAV (104) in order to get the best view of said target.

3. The system (100) as claimed in claim 1, wherein for ensuring suitability of manoeuvring the UAV (104) within the coverage area associated with the home location, the controller (106) is configured to:
check the no fly zone polygon data and the elevation data associated with the coverage area;
generate multiple coverage area lines, and further draw said lines on the geographic map, taking into consideration a pre-defined separation heading angle offset between each of the lines;
determine above ground level (AGL) altitude of multiple sample points on the generated coverage area lines, separated from each other by a first sampling distance, with respect to the home location; and
select, by comparing AGL altitude of each of the sample points with previously determined AGL altitudes of all previous sampling points, the sample point present at the maximum AGL altitude, and correspondingly compute minimum safe altitude, and minimum safe line of sight altitude for each of the sample points, wherein distinct AGL altitudes are represented with different colors.

4. The system (100) as claimed in claim 3, wherein in case, any of the sampled points is determined to intersect no fly zone, the controller (106) is configured to discard said sampled point and stop processing corresponding line.

5. The system (100) as claimed in claim 3, wherein in case, the determined maximum AGL altitude of a sample point exceeds a threshold AGL altitude, the controller (106) is configured to discard said sampled point and stop processing corresponding line.

6. The system (100) as claimed in claim 3, wherein the controller (106) is configured to decide a colour for each of the sample points by taking into consideration ratio of the AGL altitude of corresponding points and the threshold AGL altitude.

7. The system (100) as claimed in claim 1, wherein for ensuring suitability of manoeuvring the UAV on the basis of given target, the controller (106) is configured to:
allow the user to select a location of the target; and
choose a pre-defined area having centre at the location of the target, wherein the area is circular area with a custom-defined radius for searching suitable viewing point, wherein multiple viewing points are sampled and determined from the home location on the geographical map by taking into consideration a second sampling distance.

8. The system (100) as claimed in claim 7, wherein in case distance between the home location and any of the viewing points exceeds a threshold range, the controller (106) is configured to discard said points.

9. The system (100) as claimed in claim 7, wherein in case path from the home location to any of the viewing points intersects a no fly zone or any obstruction, the controller (106) is configured to discard said points.

10. The system (100) as claimed in claim 7, wherein the controller (106) is configured to decide a colour for each of the sampled viewing points using the ratio of computed viewing slant range for corresponding points and the maximum slant range till which the target is clearly resolved by camera payload of the UAV (104).

11. The system (100) as claimed in claim 7, wherein the controller (106) is configured to validate suitability of the selected home position for take-off of the UAV (104); wherein, in case the selected home position is not validated, the system (100) automatically suggests to the user, one or more suitable home positions lying within a pre-defined area from the selected home position.

12. The system (100) as claimed in claim 7, wherein the system (100) is configured to generate the operational map before initiating maneuvering of the UAV (104).

13. The system (100) as claimed in claim 1, wherein the system (100) comprises:
an image acquisition unit (102) positioned at a pre-defined position on the UAV (104), and operatively coupled to the controller (106), such that the plurality of image-frames of the RoI, acquired by the image acquisition unit (102) are transmitted to the controller (106);
wherein, the image acquisition unit (102) is a camera, which rotates 360 degrees capturing the ROI effectively, and
the controller (106) is a ground-based control system;
wherein, the controller (106) controls parameters associated with the camera, the parameters including camera pan and tilt angle.

14. A method (700) for assisting an Unmanned Aerial Vehicle (UAV) in generating an operational map of a Region of Interest (RoI), the method (700) comprising:
obtaining (702), at a controller, a geographical map of the RoI from a navigation unit;
extracting (704), at the controller, data associated with the RoI from the obtained geographical map, wherein the data comprises no fly zone polygon data, elevation data, latitude and longitude of the RoI;
acquiring (706), at the controller, a plurality of image frames of the RoI;
deriving (708), at the controller, one or more metrics by merging the extracted data with the acquired image frames;
allowing (710) a user to select, through a human-machine interface (HMI), a home position of the UAV within the RoI; and
generating (712), at the controller, the operational map of the RoI by taking into consideration the one or more derived metrics and the selected home position, and correspondingly estimating a coverage area and a viewing area associated with the UAV.

15. The method (700) as claimed in claim 14, wherein for monitoring a target present in the RoI, the method (700) comprises determining at least one position in three-dimensional (3D) space associated with the generated operational map for maneuvering the UAV in order to get the best view of said target.

16. The method (700) as claimed in claim 14, wherein for ensuring suitability of manoeuvring the UAV within the coverage area associated with the home location, the method (700) comprises:
checking the no fly zone polygon data and the elevation data associated with the coverage area;
generating multiple coverage area lines, and further drawing said lines on the geographic map, taking into consideration a pre-defined separation heading angle offset between each of the lines;
determining above ground level (AGL) altitude of multiple sample points on the generated coverage area lines, separated from each other by a first sampling distance, with respect to the home location; and
selecting the sample point present at the maximum AGL altitude by comparing AGL altitude of each of the sample points with previously determined AGL altitudes of all previous sampling points, and correspondingly computing minimum safe altitude and minimum safe line of sight altitude for each of the sample points, wherein distinct AGL altitudes are represented with different colors, decided taking into consideration ratio of the AGL altitude of corresponding points and a threshold AGL altitude.

17. The method (700) as claimed in claim 16, wherein the method (700) comprises discarding one or more of the multiple determined sampled points, in case:
said sampled points are determined to intersect no fly zone; and/ or
the determined maximum AGL altitude of said sampled points exceeds the threshold AGL altitude;
wherein, the method (700) comprises terminating processing of the coverage area lines including any of said points.

18. The method (700) as claimed in claim 14, wherein for ensuring suitability of manoeuvring the UAV on the basis of given target, the method comprises:
allowing the user to select a location of the target; and
choosing a pre-defined area having centre at the location of the target, wherein the area is circular area with a custom-defined radius for searching suitable viewing point, wherein multiple viewing points are sampled and determined from the home location on the geographical map by taking into consideration a second sampling distance, and a colour is decided for each of the sampled viewing points using the ratio of computed viewing slant range for corresponding points and the maximum slant range till which the target is clearly resolved by camera payload of the UAV.

19. The method (700) as claimed in claim 18, wherein the method (700) comprises discarding one or more of the multiple viewing points, in case:
distance between the home location and any of the viewing points exceeds a threshold range; and/ or
path from the home location to any of the viewing points intersects a no fly zone or any obstruction.

20. The method as claimed in claim 14, wherein the method (700) comprises validating suitability of the selected home position for take-off of the UAV;
wherein, in case the selected home position is not validated, the method further comprises automatically suggesting to the user, one or more suitable home positions lying within a pre-defined area from the selected home position.

21. The method (700) as claimed in claim 14, wherein the method (700) comprises generating the operational map before initiating maneuvering of the UAV.

22. An Unmanned Aerial Vehicle (UAV) (104) for generating an operational map of a Region of Interest (RoI), the UAV (104) comprising:
a rotatable camera (102) configured to acquire a plurality of image frames of the ROI;
and
a controller (106) in communication with the camera (102), the controller (106) comprising a processor coupled with a memory, wherein the memory stores one or more instructions executable by the processor to:
obtain, through a navigation unit, a geographical map of the RoI;
extract, from the obtained geographical map, data associated with the RoI, wherein the data comprises no fly zone polygon data, elevation data, latitude and longitude of the RoI;
derive one or more metrics by merging the extracted data with the acquired image frames;
allow a user to select, through a human-machine interface (HMI) in communication with the UAV (104), a home position of the UAV within the RoI; and
generate, by taking into consideration the one or more derived metrics and the selected home position, the operational map of the RoI, and correspondingly estimate a coverage area and a viewing area associated with the UAV (104);
wherein, the controller (106) is configured to validate suitability of the selected home position for take-off of the UAV (104), and in case the selected home position is not validated, the controller (106) futher automatically suggests to the user, one or more suitable home positions lying within a pre-defined area from the selected home position; and
wherein, for monitoring a target present in the RoI, the controller (106) determines at least one position in three-dimensional (3D) space associated with the generated operational map for maneuvering the UAV (104) in order to get the best view of said target.

23. The UAV (104) as claimed in claim 22, wherein for ensuring suitability of manoeuvring the UAV (104) within the coverage area associated with the home location, the controller (106) is configured to:
check the no fly zone polygon data and the elevation data associated with the coverage area;
generate multiple coverage area lines, and further draw said lines on the geographic map, taking into consideration a pre-defined separation heading angle offset between each of the lines;
determine above ground level (AGL) altitude of multiple sample points on the generated coverage area lines, separated from each other by a first sampling distance, with respect to the home location; and
select, by comparing AGL altitude of each of the sample points with previously determined AGL altitudes of all previous sampling points, the sample point present at the maximum AGL altitude, and correspondingly compute minimum safe altitude, and minimum safe line of sight altitude for each of the sample points, wherein distinct AGL altitudes are represented with different colors, decided by taking into consideration ratio of the AGL altitude of corresponding points and a threshold AGL altitude.

24. The UAV (104) as claimed in claim 22, wherein for ensuring suitability of manoeuvring the UAV (104) on the basis of given target, the controller (206) is configured to:
allow the user to select a location of the target; and
choose a pre-defined area having centre at the location of the target, wherein the area is circular area with a custom-defined radius for searching suitable viewing point, wherein multiple viewing points are sampled and determined from the home location on the geographical map by taking into consideration a second sampling distance; and a colour is decided for each of the sampled viewing points using the ratio of computed viewing slant range for corresponding points and the maximum slant range till which the target is clearly resolved by camera payload of the UAV (104).
